# EUROPÄISCHE PATENTSCHRIFT

(11) **EP 3 099 623 B1**
(45) Veröffentlichungstag und Bekanntmachung des Hinweises auf die Patenterteilung: **22.11.2017**
(21) Anmeldenummer: 15700693.3
(22) Anmeldetag: 19.01.2015
(51) Int. Cl.: B66D 5/14, B66D 5/26, B66D 5/28, B60T 13/22, B60T 15/02, F16D 55/22, F16D 59/02

(54) **FLUIDISCH BETÄTIGBARES, AUSFALLSICHERES SCHEIBENBREMSSYSTEM SOWIE HEBEWERK MIT DIESEM SYSTEM**
FLUIDICALLY ACTUATED, FAIL-SAFE DISK BRAKE SYSTEM, AND HOISTING DEVICE WITH SUCH A SYSTEM
DISPOSITIF DE FREIN À DISQUE SÛR, À ACTIONNEMENT PAR FLUIDE, ET ÉLÉVATEUR MUNI D'UN TEL SYSTÈME

(30) Priorität: 30.01.2014 DE 102014101128
(43) Veröffentlichungstag der Anmeldung: 07.12.2016
(73) Patentinhaber: MHWirth GmbH, 41812 Erkelenz (DE)
(72) Erfinder: MOLL, Roland, 52525 Heinsberg (DE)
(74) Vertreter: Kluin, Jörg-Eden
(86) Internationale Anmeldenummer: PCT/EP2015/050868
(87) Internationale Veröffentlichungsnummer: WO 2015/113847

(56) Entgegenhaltungen:
- WO-A1-03/072904
- CN-A- 102 701 103
- DE-A1- 3 204 695
- DE-A1-102006 003 832
- DE-B3-102007 041 411
- SU-A2- 787 349

## Beschreibung

Die Erfindung betrifft ein fluidisch betätigbares Scheibenbremssystem, insbesondere für ein Hebewerk, mit einer Mehrzahl von Bremszylinderpaaren, die Bremszylinder aufweisen, die beidseitig einer Bremsscheibe in einem oder mehreren Bremssätteln angeordnet sind, wobei jeder Bremszylinder einen Bremskolben umfasst, auf den mittels einer Federanordnung eine zur Bremsscheibe hin gerichtete Federkraft ausgeübt wird, wobei an jedem Bremszylinder ein erster und ein zweiter Fluidanschluss vorgesehen ist, durch welche dem Bremszylinder Fluid zuführbar ist, mit dem auf den Bremskolben eine der Federkraft entgegen gerichtete Kraft zur Reduzierung der durch die Federkraft hervorgerufenen Bremskraft ausübbar ist.

Mit "fluidisch" sei insbesondere hydraulisch oder pneumatisch gemeint. Dementsprechend ist unter "Fluid" insbesondere Hydraulikflüssigkeit oder Druckluft zu verstehen.

Ein derartiges Scheibenbremssystem wird als "ausfallsicher" ("fail safe") bezeichnet, da bei einem Defekt schlimmstenfalls zu erwarten ist, dass der an den Bremszylindern anstehende Fluiddruck abfällt, was zur Bremsaktivierung und damit zur Verhinderung von unkontrollierten Bewegungszuständen führt. Es ist beispielsweise aus der DE 10 2007 041 411 B3, DE 10 2006 003 832 A1, DE 36 04 451 A1 und der DE 32 04 695 A1 bekannt.

Ein Hebewerk mit einem derartigen Scheibenbremssystem ist beispielsweise aus der WO 03/072904 A1 bekannt. Dieses Hebewerk dient zum Ablassen und Aufholen einer Last, insbesondere einer Bohreinrichtung oder einer Bohrverschlusseinrichtung, beispielsweise von einer schwimmenden Plattform auf den Meeresgrund oder in bzw. auf ein Bohrloch. Es weist eine drehbar gelagerte Wickeltrommel auf, an der ein meist als Stahlseil ausgebildetes flexibles Zugmittel befestigt ist, das durch Drehantrieb der Wickeltrommel auf- bzw. abgewickelt werden kann. Die Wickeltrommel ist mit einer Bremsscheibe des Scheibenbremssystems verbunden. Mit Hilfe der in mehreren Bremssätteln vorgesehenen Bremszylinderpaaren - auch "Kalipper" genannt - kann die Drehgeschwindigkeit der Wickeltrommel während des Abwickelvorganges abgebremst oder auch vollständig blockiert werden.

Um die Bremskraft beeinflussen zu können, muss der an jedem Bremszylinder anstehende Druck in derselben Weise verändert werden, wozu die ersten und zweiten Fluidanschlüsse aller Bremszylinder im einfachsten Fall lediglich parallel mit derselben Fluiddruckquelle verbunden sein müssen.

Allerdings erfordern Sicherheitsvorschriften, dass zu Test- und Prüfzwecken die Bremszylinderpaare einzeln und auch in unterschiedlichen Kombinationen miteinander aktivierbar oder deaktivierbar sind. Hierzu sind bei dem bekannten Scheibenbremssystem die ersten Fluidanschlüsse der beiden Bremszylinder eines Bremszylinderpaares an eine erste Druckleitung, die beiden zweiten Fluidanschlüsse an eine zweite Druckleitung angeschlossen. Jede der Druckleitungen umfasst ein separates 2/2 Wegeventil, das elektromagnetisch gegen eine Federkraft betätigbar ist. Das 2/2 Wegeventil ist dabei derart konzipiert, dass es sich unter Wirkung der Federkraft im stromlosen Zustand in Durchlassstellung befindet.

Nachteilig bei einem derartigen Scheibenbremssystem ist zunächst der mit den einzelnen 2/2 Wegeventilen verbundene Installationsaufwand. Darüber hinaus ist von Nachteil, dass die Betriebssicherheit durch Leckagen, die in den Fluidleitungen zwischen den 2/2 Wegeventilen und den Bremszylindern entstehen können, negativ beeinflusst ist.

Der Erfindung liegt daher die Aufgabe zugrunde, ein bezüglich dieser Nachteile verbessertes Scheibenbremssystem zu schaffen.

Diese Aufgabe wird durch das in Anspruch 1 wiedergegebene Scheibenbremssystem gelöst.

Bei dem erfindungsgemäßen Scheibenbremssystem ist jeweils einem der ersten oder zweiten Fluidanschlüsse der Bremszylinder des Bremszylinderpaares ein 2/2 Wegeventil zugeordnet und die jeweils anderen der ersten oder zweiten Fluidanschlüsse der Bremszylinder des Bremszylinderpaares sind fluidisch miteinander verbunden. Die Bremszylinder eines Bremszylinderpaares sind mit anderen Worten fluidisch in Reihe geschaltet, wobei in die Zuleitungen zur Fluiddruckquelle jeweils ein 2/2 Wegeventil eingeschaltet ist.

Aufgrund dieser Maßnahme ist es möglich, wie bevorzugt, die 2/2 Wegeventile als am oder im Bremssattel angeordnete Cartridge-Ventile, auch "Einschraubventile" genannt, auszubilden. Jeder Bremssattel benötigt aufgrund der Reihenschaltung der Bremszylinder daher lediglich ein einziges Cartridge-Ventil pro Bremszylinder, um das Bremszylinderpaar wahlweise von der Fluidquelle zu trennen oder mit dieser zu verbinden, wohingegen im Falle der fluidischen Parallelschaltung der Bremszylinder eines Bremszylinderpaares vier Cartridge-Ventile hierzu benötigt worden wären, nämlich eines an jedem Fluidanschluss der Bremszylinder.

Das erfindungsgemäße Bremssystem zeichnet sich daher durch einen reduzierten Installationsaufwand aus. Die Gefahr einer Leckage kann durch die Möglichkeit der Ausbildung als Cartridge-Ventile reduziert werden. Auch ist der von dem Scheibenbremssystem benötigte Einbauraum durch die Verwendung von Cartridge-Ventilen reduziert.

Sind die 2/2 Wegeventile - wie bevorzugt - als motorisch betätigbar gegen eine Federkraft in die Schließstellung bringbare Ventile ausgebildet, so müssen diese lediglich zu Test- oder Prüfzwecken mit elektrischer Leistung beaufschlagt werden, wodurch sich der Energiebedarf im normalen Betrieb reduziert und die Betriebssicherheit erhöht.

Um zu Test- und Prüfzwecken die Wirksamkeit einzelner oder verschiedener Gruppen von Bremszylinderpaaren erfassen zu können, ist bei einer bevorzugten Ausführungsform des erfindungsgemäßen Bremssystems vorgesehen, die 2/2 Wegeventile eines Bremszylinderpaares unabhängig von den 2/2 Wegeventilen der anderen Bremszylinderpaare oder wahlweise zusammen mit einem oder mehreren der anderen Bremszylinderpaare betätigbar auszubilden.

Das erfindungsgemäße Bremssystem ist insbesondere für ein Hebewerk der eingangs beschriebenen Art vorgesehen. Die Erfindung betrifft daher auch ein mit einem derartigen Bremssystem ausgestattetes Hebewerk.

Die Erfindung soll nachfolgend anhand der Zeichnungen weiter verdeutlicht werden. Es zeigen:
- Fig. 1: einen schematischen Hydraulikplan eines zum Stand der Technik gehörenden Ausführungsbeispiels eines Scheibenbremssystems;
- Fig. 2: einen schematischen Hydraulikplan eines Ausführungsbeispiels des erfindungsgemäßen Scheibenbremssystems sowie
- Fig. 3: ein Ausführungsbeispiel eines Hebewerks, für welches das erfindungsgemäße Scheibenbremssystem beispielsweise vorgesehen ist.

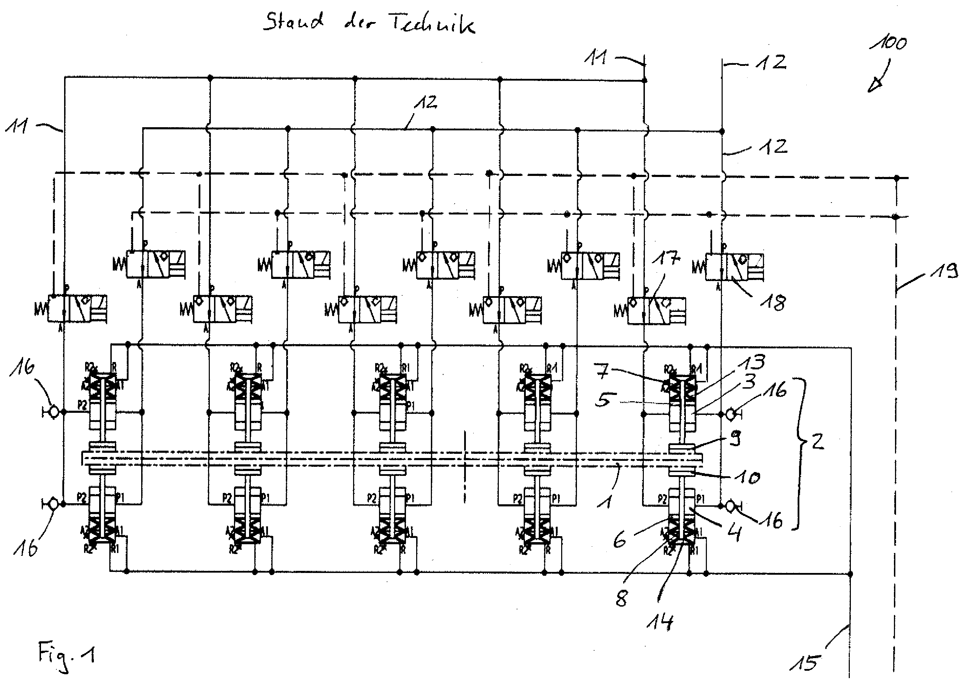

Das in Fig. 1 dargestellte Ausführungsbeispiel eines zum Stand der Technik gehörenden Scheibenbremssystems 100 umfasst eine Bremsscheibe 1 sowie fünf Bremszylinderpaare 2, die jeweils einander gegenüberliegend zur Bremsscheibe angeordnete Bremszylinder 3, 4 aufweisen. Jeder Bremszylinder 3, 4 umfasst einen einfach wirkenden Bremskolben 5, 6.

Auf jeden Bremskolben 5, 6 wirkt eine Federanordnung 7, 8 und übt eine zur Bremsscheibe 1 gerichtete Federkraft auf den Bremskolben aus.

Jeder Bremskolben 5, 6 wirkt auf einen Bremsbelag 9, 10. Dieser wird unter der Federkraft gegen die Bremsscheibe 1 gedrückt, wodurch die Bremswirkung hervorgerufen wird.

Zur Reduzierung der Bremswirkung weist jeder Bremszylinder 3, 4 einen ersten Fluidanschluss P1 und einen zweiten Fluidanschluss P2 auf. Jeder Fluidanschluss P1, P2 ist mit einer Druckleitung 11, 12 verbunden, so dass ein über die Druckleitungen 11, 12 bereitgestellter Fluiddruck, beispielsweise hydraulischer Druck an den Bremskolben 5, 6 anliegt und entgegen die mittels der jeweiligen Federanordnung 7, 8 auf den jeweiligen Bremskolben 5, 6 und damit den jeweiligen Bremsbelag 9, 10 ausgeübten Kraft wirkt.

Damit zwischen den die Federanordnungen 7, 8 umfassenden Kammern 13, 14 der Bremszylinder 3, 4 und der Umgebung ein Luftaustausch stattfinden kann, weist jede Kammer 13, 14 einen Anschluss A1 zur Be- und Entlüftung auf. Darüber hinaus ist an jeder Kammer 13, 14 ein Anschluss R1 vorgesehen, der der Abfuhr eventueller Leckageflüssigkeit, die den jeweiligen Bremskolben 5, 6 passiert hat, dient. Bei dem dargestellten Ausführungsbeispiel sind die Anschlüsse A1, R1 mit einem Leitungssystem 15 verbunden.

In die Druckleitungen 11, 12 sind an den beiden äußeren Bremszylinderpaaren Entlüftungsventile 16 eingeschaltet, die für den Fall eines Hydraulikbetriebs dem Ablassen von Luft nach dem Befüllvorgang mit Hydraulikflüssigkeit dienen.

Damit zu Test- und Prüfzwecken jedes der Bremszylinderpaare 2 separat voneinander wahlweise mit dem über die Druckleitungen 11, 12 bereitgestellten Fluiddruck beaufschlagbar oder von den Druckleitungen trennbar ist, ist für jedes der Bremszylinderpaare 2 in jede der Druckleitungen 11, 12 ein 2/2 Wegeventil 17, 18 eingeschaltet. Es ist jeweils gegen die Wirkung einer Federkraft elektromagnetisch betätigbar derart ausgebildet, dass es im stromlosen Zustand auf Durchlass geschaltet ist. Zur Entkopplung eines Bremszylinderpaares 2 aus den Druckleitungen 11, 12 sind dann die jeweils zugehörigen 2/2 Wegeventile 17, 18 mit Strom zu beaufschlagen, wodurch das Bremszylinderpaar 2 unabhängig von einer späteren Veränderung des an den Druckleitungen 11, 12 anliegenden Drucks unter dem Fluiddruck gehalten werden kann, der zum Zeitpunkt der Betätigung der 2/2 Wegeventile 17, 18 anlag.

Damit eventuelles Leckagefluid aus den 2/2 Wegeventilen 17, 18 nicht unkontrolliert in die Umgebung austritt, ist jedes der Ventile mit einer Leckageleitung 19 verbunden.

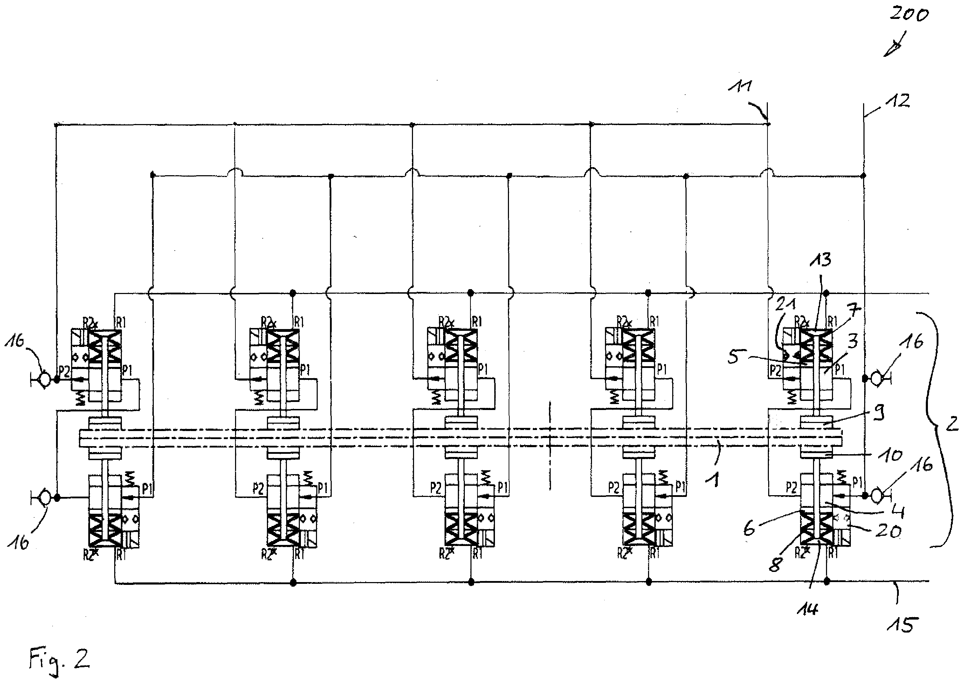

Von dem in Fig. 1 dargestellten Bremssystem, auf dessen obige Beschreibung Bezug genommen wird, sofern nicht nachfolgend anders beschrieben, unterscheidet sich das in Fig. 2 dargestellte Ausführungsbeispiel des erfindungsgemäßen Bremssystems darin, dass der erste Fluidanschluss P1 eines der Bremszylinder der Bremszylinderpaare 2, hier des Bremszylinders 4, mit der Druckleitung 12, wohingegen der zweite Fluidanschluss P2 mit dem ersten Fluidanschluss P1 des anderen Bremszylinders dieses Bremszylinderpaares, hier des Bremszylinders 3, und der zweite Fluidanschluss P2 dieses Bremszylinders 3 mit der Druckleitung 11 verbunden ist. Durch diese fluidische Hintereinanderschaltung kann dieselbe Funktionalität wie bei dem Ausführungsbeispiel gemäß des Standes der Technik mit lediglich zwei als Cartridge-Ventile ausgebildeten 2/2 Wegeventilen erzielt werden, wobei das eine Cartridge-Ventil 20 zum wahlweisen Trennen des ersten Fluidanschlusses P1 von der Druckleitung 12 an dem Bremszylinder 4 vorgesehen ist, wohingegen das zweite Cartridge-Ventil 21 zum wahlweisen Trennen des zweiten Fluidanschlusses P2 des Bremszylinders 3 von der Druckleitung 11 an dem Bremszylinder 3 vorgesehen ist. Die Cartridge-Ventile 20, 21 sind funktional entsprechend den 2/2 Wegeventilen 17, 18 ausgebildet.

Ebenso wie die Ausführungsform 100 nach dem Stand der Technik weist auch die in Fig. 2 dargestellte Ausführungsform eines erfindungsgemäßen Scheibenbremssystems 200 Entlüftungsventile 16 sowie ein Lüftungssystem 15 auf, an welches bei dem dargestellten Ausführungsbeispiel jedoch lediglich die Anschlüsse R1 zur Abfuhr von Leckagefluid angeschlossen sind.

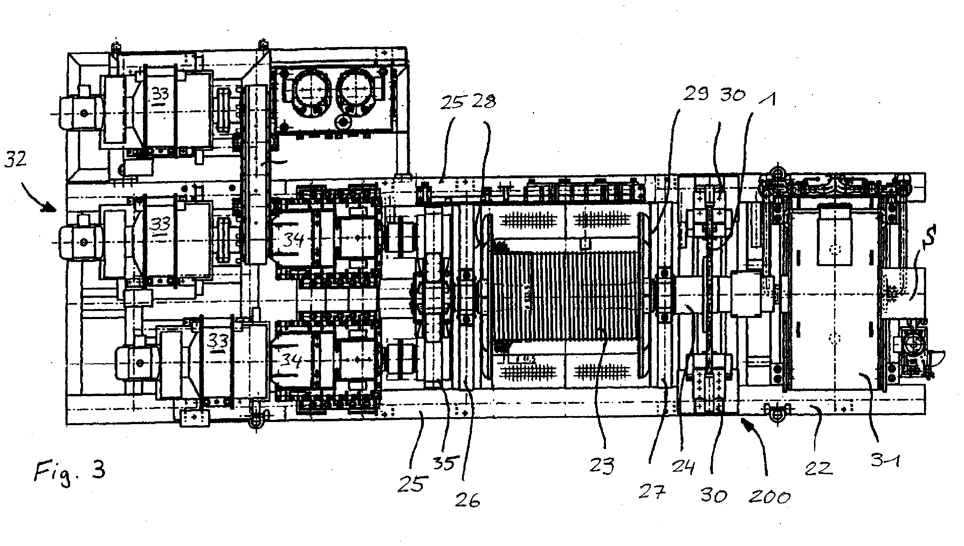

Ein erfindungsgemäßes Scheibenbremssystem 200 ist insbesondere für die Verwendung in einem Hebesystem vorgesehen, welches beispielsweise wie in Fig. 3 dargestellt ausgebildet sein kann:
Die Bauteile des Hebewerks sind auf einem Rahmen 22 montiert. Zum Aufholen und Ablassen sowie zum Halten einer Last, insbesondere eines Bohrgerätes oder dergleichen ist eine Trommel 23, die drehfest auf einer Trommelwelle 24 befestigt ist und deren Achse S parallel zu den Längsseiten 25 des Rahmens 22 verläuft, vorgesehen. Sie ist in Lagerböcken 26, 27 gelagert, die jenseits der beiden Stirnseiten 28, 29 der Trommel 23 angeordnet sind.

In dem in Fig. 1 rechts der Trommel 23 befindlichen Bereich der Trommelwelle 24 ist drehfest die Bremsscheibe 1 angeordnet, die Teil des Scheibenbremssystems 200 ist. Die Bremszylinderpaare 2 dieses Scheibenbremssystems sind bei dem in Fig. 3 dargestellten Ausführungsbeispiel in mehreren Bremssätteln 30 angeordnet, von denen in Fig. 3 lediglich zwei erkennbar sind.

Zur Unterstützung des Scheibenbremssystems 200 beim Bremsen eines Abwickelvorganges ist des Weiteren eine mit der Trommelwelle 24 verbundene Wirbelstrombremse 31 vorgesehen.

Auf der gemäß Fig. 1 linken Seite der Trommel 23 ist eine Antriebseinheit 32 vorgesehen, die bei dem dargestellten Ausführungsbeispiel elektrisch arbeitende Antriebsmotoren 33 sowie Getriebeeinheiten 34 sowie ein Summengetriebe 35 umfasst.

### Bezugszeichenliste:

- 100, 200: Scheibenbremssystem
- 1: Bremsscheibe
- 2: Bremszylinderpaare
- 3: Bremszylinder
- 4: Bremszylinder
- 5: Bremskolben
- 6: Bremskolben
- 7: Federanordnung
- 8: Federanordnung
- 9: Bremsbelag
- 10: Bremsbelag
- P1: erster Fluidanschluss
- P2: zweiter Fluidanschluss
- 11: Druckleitung
- 12: Druckleitung
- 13: Kammer
- 14: Kammer
- A1: Anschluss
- R1: Anschluss
- 15: Leitungssystem
- 16: Entlüftungsventile
- 17: 2/2 Wegeventil
- 18: 2/2 Wegeventil
- 19: Leckageleitung
- 20: Cartridge-Ventil
- 21: Cartridge-Ventil
- 22: Rahmen
- 23: Trommel
- 24: Trommelwelle
- S: Achse
- 25: Längsseiten
- 26: Lagerbock
- 27: Lagerbock
- 28: Stirnseite
- 29: Stirnseite
- 30: Bremssättel
- 31: Wirbelstrombremse
- 32: Antriebseinheit
- 33: Antriebsmotoren
- 34: Getriebeeinheiten
- 35: Summengetriebe

## Patentansprüche

1. Fluidisch betätigbares Scheibenbremssystem (200), mit einer Mehrzahl von Bremszylinderpaaren (2), die Bremszylinder (3, 4) aufweisen die beidseitig einer Bremsscheibe (1) in einem oder mehreren Bremssätteln (30) angeordnet sind,
wobei jeder Bremszylinder (3, 4) einen Bremskolben (5, 6) umfasst, auf den mittels einer Federanordnung (7, 8) eine zur Bremsscheibe (1) gerichtete Federkraft ausgeübt wird,
wobei an jedem Bremszylinder (3, 4) ein erster und ein zweiter Fluidanschluss (P1, P2) vorgesehen ist, durch welche dem Bremszylinder (4, 5) Fluid zuführbar ist, mit dem auf den Bremskolben (5, 6) eine der Federkraft entgegengesetzte Kraft zur Reduzierung der durch die Federkraft hervorgerufenen Bremskraft ausübbar ist,
**dadurch gekennzeichnet,**
**dass** jeweils einem der ersten oder zweiten Fluidanschlüsse (P1, P2) der Bremszylinder (4, 5) des Bremszylinderpaares (2) ein 2/2 Wegeventil (20, 21) zugeordnet ist,
und **dass** die jeweils anderen der ersten oder zweiten Fluidanschlüsse (P1, P2) der Bremszylinder (3, 4) des Bremszylinderpaares (2) fluidisch miteinander verbunden sind.

2. Scheibenbremssystem nach Anspruch 1, **dadurch gekennzeichnet, dass** die 2/2 Wegeventile als am oder im Bremssattel (30) angeordnete Cartridge-Ventile ausgebildet sind.

3. Scheibenbremssystem nach Anspruch 1 oder 2, **dadurch gekennzeichnet, dass** die 2/2 Wegeventile als motorisch betätigbare, gegen eine Federkraft in die Schließstellung bringbare Ventile ausgebildet sind.

4. Scheibenbremssystem nach Anspruch 3, **dadurch gekennzeichnet, dass** die 2/2 Wegeventile elektromagnetisch betätigbar ausgebildet sind.

5. Scheibenbremssystem nach Anspruch 3 oder 4, **dadurch gekennzeichnet, dass** die 2/2 Wegeventile eines Bremszylinderpaares zwei unabhängig von den 2/2 Wegenvetilen der anderen Bremszylinderpaare oder wahlweise zusammen mit einem oder mehreren der anderen Bremszylinderpaare betätigbar ausgebildet sind.

6. Hebewerk mit einem Bremssystem nach einem der Ansprüche 1 bis 5.

## Claims

1. Fluidically operable disc brake system (200) with a plurality of brake cylinder pairs (2) having brake cylinders (3, 4) which, on both sides of a brake disc (1), are arranged in one or more brake callipers (30),
wherein each brake cylinder (3, 4) comprises a brake piston (5, 6), onto which a spring force, directed towards the brake disc (1), is exerted by means of a spring device (7, 8),
wherein a first and a second fluid connection (P1, P2) are provided on each brake cylinder (3, 4) through which fluid can be supplied to the brake cylinder (4, 5) with which a force opposing the spring force can be exerted onto the brake piston (5, 6) for reducing the brake force caused by the spring force,
**characterized in**
**that** a 2/2 way valve (20, 21) is assigned to respectively one of the first or second fluid connections (P1, P2) of the brake cylinders (4, 5) of the brake cylinder pair (2),
and **that** the respectively others of the first or second fluid connections (P1, P2) of the brake cylinders (3, 4) of the brake cylinder pair (2) are fluidically connected with each other.

2. Disc brake system according to claim 1, **characterized in that** the 2/2 way valves are designed as cartridge valves arranged on or in the brake calliper (30).

3. Disc brake system according to claim 1 or 2, **characterized in that** the 2/2 way valves are designed as valves which can be operated by a motor and which can be brought into the closed position against a spring force.

4. Disc brake system according to claim 3, **characterized in that** the 2/2 way valves are designed to be electromagnetically operable.

5. Disc brake system according to claim 3 or 4, **characterized in that** the 2/2 way valves of a brake cylinder pair are designed to be operable two independently of the 2/2 way valves of the other brake cylinder pairs or optionally together with one or more of the other brake cylinder pairs.

6. Hoisting apparatus with a braking system according to any of the claims 1 to 5.

## Revendications

1. Système de frein à disque pouvant être actionné par un fluide (200) comprenant une pluralité de paires de cylindres de frein (2), les cylindres de frein (3, 4) étant disposés de part et d'autre d'un disque de frein (1) dans un ou plusieurs étriers de frein (30),
chaque cylindre de frein (3, 4) comprenant un piston de frein (5, 6), sur lequel une force élastique orientée en direction du disque de frein (1) est exercée au moyen d'un système de ressort (7, 8),
un premier et un deuxième raccords de fluide (P1, P2), à travers lesquels un fluide, permettant d'exercer une force s'opposant à la force élastique sur le piston de frein (5, 6) pour réduire la force de freinage engendrée par la force élastique, peut être amené au cylindre de frein (4, 5), étant présents sur chaque cylindre de frein (3, 4),
**caractérisé en ce**
**qu'**un distributeur 2/2 (20, 21) est associé respectivement au premier ou au deuxième raccord de fluide (P1, P2), du cylindre de frein (4, 5) de la paire de cylindres de frein (2)
et en ce que les autres raccords parmi les premiers ou les deuxièmes raccords de fluide (P1, P2) du cylindre de frein (3, 4) de la paire de cylindres de frein (2) sont en liaison fluidique les uns avec les autres.

2. Système de frein à disque selon la revendication 1, **caractérisé en ce que** les distributeurs 2/2 sont conçus sous forme de soupapes à cartouche disposées au niveau ou dans l'étrier de frein (30).

3. Système de frein à disque selon la revendication 1 ou 2, **caractérisé en ce que** les distributeurs 2/2 sont conçus sous forme de soupapes à actionnement motorisé, pouvant être menées vers la position de fermeture contre une force élastique.

4. Système de frein à disque selon la revendication 3, **caractérisé en ce que** les distributeurs 2/2 sont conçus pour pouvoir être actionnés par voie électromagnétique.

5. Système de frein à disque selon la revendication 3 ou 4, **caractérisé en ce que** les distributeurs 2/2 d'une paire de cylindres de frein sont conçus pour pouvoir être actionnés indépendamment des distributeurs 2/2 des autres paires de cylindres de frein ou, sélectivement, conjointement avec une ou plusieurs des autres paires de cylindres de frein.

6. Dispositf élevateur comprenant un système de frein selon l'une des revendications 1 à 5.
